# EUROPEAN PATENT SPECIFICATION

(11) **EP 4 253 249 B1**
(45) Date of publication and mention of the grant of the patent: **27.11.2024**
(21) Application number: 23163778.6
(22) Date of filing: 23.03.2023
(51) Int. Cl.: B64D 27/24, B64D 31/06, B64C 29/00

(54) **CONTROL DEVICE FOR AIRCRAFT**
STEUERVORRICHTUNG FÜR FLUGZEUGE
DISPOSITIF DE COMMANDE POUR AÉRONEF

(30) Priority: 30.03.2022 JP 2022054782
(43) Date of publication of application: 04.10.2023
(73) Proprietor: HONDA MOTOR CO., LTD., Minato-ku Tokyo 107-8556 (JP)
(72) Inventor: KITA, Akinori, Saitama, 351-0193 (JP); YAMAMOTO, Yoshifumi, Saitama, 351-0193 (JP); NAKANO, Minato, Saitama, 351-0193 (JP)
(74) Representative: Weickmann & Weickmann PartmbB

(56) References cited:
- WO-A1-2020/225510
- CN-A- 112 429 248
- CN-A- 114 072 335
- US-A1- 2017 210 481
- US-A1- 2021 214 094
- US-A1- 2021 339 853
- US-A1- 2021 370 786

## Description

### BACKGROUND OF THE INVENTION

### FIELD OF THE INVENTION

The present invention relates to a control device for an aircraft.

### DESCRIPTION OF THE RELATED ART

US 2021/0370786 A1 discloses a multi-rotor aircraft. The multi-rotor aircraft includes a plurality of rotors, and an electric motor is provided corresponding to each rotor. Some of the electric motors are supplied with electric power from one of two generators, and another some of the electric motors are supplied with electric power from the other generator.

### SUMMARY OF THE INVENTION

In the technique disclosed in US 2021/0370786 A1, when electric power cannot be supplied from one of the generators to some of the electric motors, these electric motors are supplied with electric power from a battery. In order to increase the flight duration of the multi-rotor aircraft after electric power is no longer supplied from the generator, the capacity of the battery needs to be increased. However, when the capacity of the battery is increased, there arises a problem in that the weight of the battery increases and the weight of the fuselage also increases.

An object of the present invention is to solve the above-mentioned problem.

According to an aspect of the present invention, provided is a control device for an aircraft, the aircraft comprising: at least one first generator configured to generate electric power; at least one first battery configured to store electric power; at least one first electric motor configured to operate with electric power supplied from the first generator and the first battery; at least one second generator configured to generate electric power; at least one second battery configured to store electric power; at least one second electric motor configured to operate with electric power supplied from the second generator and the second battery; and a plurality of rotors configured to generate thrust acting on a fuselage, wherein the control device comprises an electric motor control section configured to control the first electric motor and the second electric motor, and wherein each of the rotors is driven by one of the first electric motor or the second electric motor, or both of the first electric motor and the second electric motor, and in a case where supply of electric power from the first generator to the first electric motor is unavailable and supply of electric power from the second generator to the second electric motor is available, the electric motor control section reduces power consumption of the first electric motor by reducing thrust generated by the rotor driven by the first electric motor, and increases thrust generated by the rotor driven by the second electric motor, as compared with a case where the supply of the electric power from the first generator to the first electric motor is available and the supply of the electric power from the second generator to the second electric motor is available.

According to the present invention, an increase in the weight of the fuselage can be suppressed.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic diagram of an aircraft;
FIG. 2 is a schematic diagram showing a configuration of a power supply system;
FIG. 3 is a control block diagram of a flight controller;
FIG. 4 is a flowchart showing a process of output power control;
FIG. 5 is an image diagram of output power distribution in each VTOL electric motor and each cruise electric motor; and
FIG. 6 is an image diagram of output power distribution in each VTOL electric motor and each cruise electric motor.

### DETAILED DESCRIPTION OF THE INVENTION

### [First Embodiment]

### [Configuration of Aircraft]

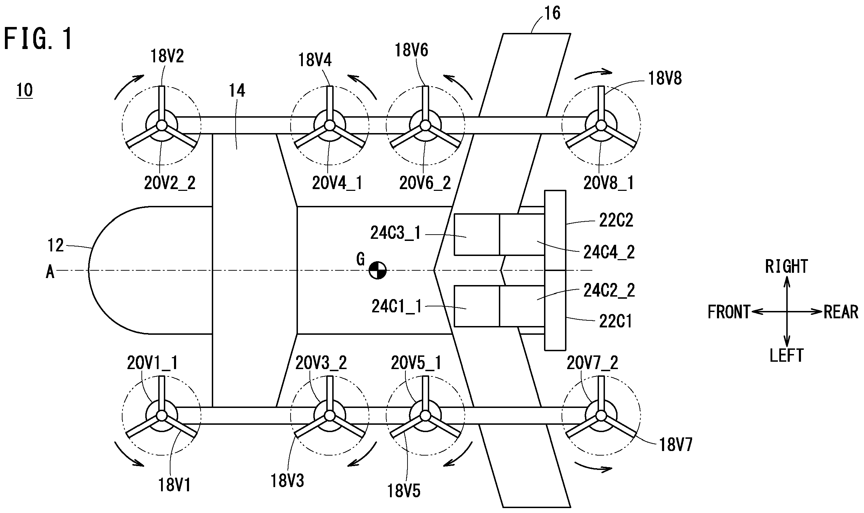

FIG. 1 is a schematic diagram of an aircraft 10. The aircraft 10 of the present embodiment is an electric vertical take-off and landing aircraft (eVTOL aircraft). In the aircraft 10, rotors are driven by electric motors. The aircraft 10 generates vertical thrust and horizontal thrust by the rotors. Further, the aircraft 10 is a hybrid aircraft. The aircraft 10 includes a generator and a battery as power sources of the electric motor. In the aircraft 10, electric power generated by the generator is supplied to the electric motor. When the electric power generated by the generator is insufficient with respect to the required electric power, the electric power stored in the battery is supplied to the electric motor.

The aircraft 10 includes a fuselage 12. The fuselage 12 is provided with a cockpit, a cabin, and the like. A pilot rides in the cockpit and controls the aircraft 10. Passengers and the like ride in the cabin. The aircraft 10 may be automatically controlled.

The aircraft 10 includes a front wing 14 and a rear wing 16. When the aircraft 10 moves forward, lift is generated in each of the front wing 14 and the rear wing 16.

The aircraft 10 includes eight VTOL rotors 18V. The eight VTOL rotors 18V are a rotor 18V1, a rotor 18V2, a rotor 18V3, a rotor 18V4, a rotor 18V5, a rotor 18V6, a rotor 18V7, and a rotor 18V8.

The rotor 18V1, the rotor 18V3, the rotor 18V5, and the rotor 18V7 are disposed on the left side of a center line A of the fuselage 12 in the left-right direction. The rotor 18V2, the rotor 18V4, the rotor 18V6, and the rotor 18V8 are disposed on the right side of the center line A. That is, four VTOL rotors 18V are disposed on the left side of the center line A, and four VTOL rotors 18V are disposed on the right side of the center line A.

The center of gravity G of the aircraft 10 is located on the center line A of the fuselage 12. In a state where the aircraft 10 is viewed from above, the center of gravity G is located between the rotor 18V4 and the rotor 18V6 in the front-rear direction of the fuselage 12. Further, the center of gravity G is located between the rotor 18V3 and the rotor 18V5 in the front-rear direction of the fuselage 12.

In a state where the aircraft 10 is viewed from above, the rotor 18V8 is provided at a position point-symmetrical to the rotor 18V1 with respect to the center of gravity G. The rotor 18V7 is provided at a position point-symmetrical to the rotor 18V2 with respect to the center of gravity G. The rotor 18V6 is provided at a position point-symmetrical to the rotor 18V3 with respect to the center of gravity G. The rotor 18V5 is provided at a position point-symmetrical to the rotor 18V4 with respect to the center of gravity G.

One VTOL electric motor 20V is provided for one VTOL rotor 18V. Specifically, an electric motor 20V1_1 is provided for the rotor 18V1, an electric motor 20V2_2 is provided for the rotor 18V2, an electric motor 20V3_2 is provided for the rotor 18V3, an electric motor 20V4_1 is provided for the rotor 18V4, an electric motor 20V5_1 is provided for the rotor 18V5, an electric motor 20V6_2 is provided for the rotor 18V6, an electric motor 20V7_2 is provided for the rotor 18V7, and an electric motor 20V8_1 is provided for the rotor 18V8. Each VTOL rotor 18V is driven by each VTOL electric motor 20V.

Each VTOL rotor 18V generates thrust mainly toward the upper side of the fuselage 12. The thrust of each VTOL rotor 18V is controlled by adjusting the rotational speed of the rotor and the pitch angle of the blades. If the conditions such as the pitch angle of the blades are constant, the thrust generated by the VTOL rotor 18V increases as the output power of the VTOL electric motor 20V increases. Each VTOL rotor 18V is mainly used during vertical take-off, during transition from vertical take-off to cruising, during transition from cruising to vertical landing, during vertical landing, during hovering, and the like. Further, each VTOL rotor 18V is used during attitude control.

By controlling the thrust of each VTOL rotor 18V, a propulsive force is applied mainly upward to the fuselage 12. By controlling the thrust of each VTOL rotor 18V, a roll moment, a pitch moment, and a yaw moment are caused to act on the fuselage 12. The VTOL rotor 18V corresponds to a vertical rotor of the present invention.

The aircraft 10 includes two cruise rotors 22C. The two cruise rotors 22C are a rotor 22C1 and a rotor 22C2. The rotor 22C1 and the rotor 22C2 are attached to the rear portion of the fuselage 12. The rotor 22C1 is disposed on the left side of the center line A. The rotor 22C2 is disposed on the right side of the center line A. That is, one cruise rotor 22C is disposed on the left side of the center line A, and one cruise rotor 22C is disposed on the right side of the center line A.

Two cruise electric motors 24C are provided for each cruise rotor 22C. Specifically, an electric motor 24C1_1 and an electric motor 24C2_2 are provided for the rotor 22C1, and an electric motor 24C3_1 and an electric motor 24C4_2 are provided for the rotor 22C2. One cruise rotor 22C is driven by two cruise electric motors 24C.

Each cruise rotor 22C generates thrust mainly toward the front of the fuselage 12. The thrust of each cruise rotor 22C is controlled by adjusting the rotational speed of the rotor and the pitch angle of the blades. If the conditions such as the pitch angle of the blades are constant, the thrust generated by the cruise rotor 22C increases as the output power of the cruise electric motor 24C increases. Each cruise rotor 22C is mainly used during transition from vertical take-off to cruising, during cruising, during transition from cruising to vertical landing, and the like. By controlling the thrust of each cruise rotor 22C, a propulsive force is applied mainly forward to the fuselage 12. The cruise rotor 22C corresponds to a horizontal rotor of the present invention.

### [Configuration of Power Supply System]

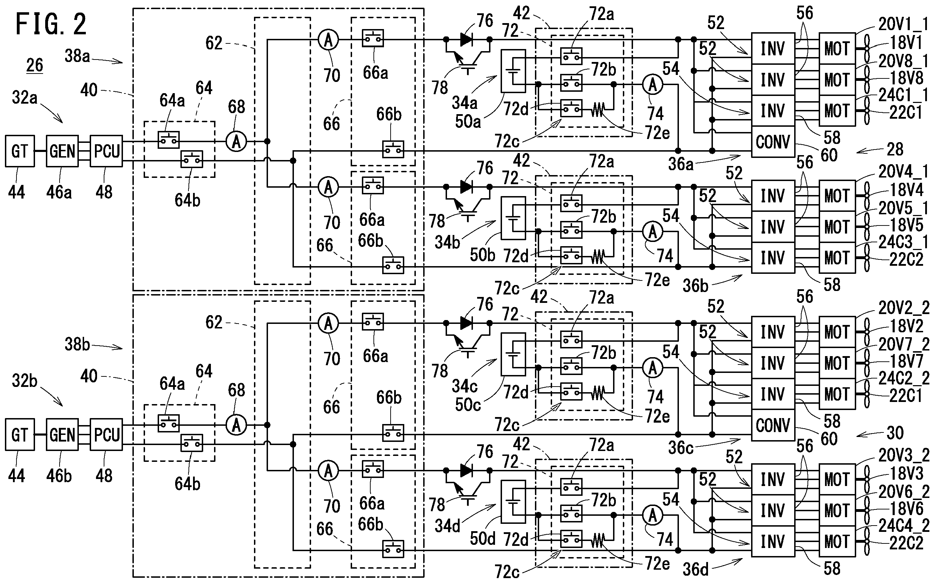

FIG. 2 is a schematic diagram showing a configuration of a power supply system 26.

The aircraft 10 includes the electric motor 20V1_1, the electric motor 20V4_1, the electric motor 20V5_1, the electric motor 20V8_1, the electric motor 24C1_1, and the electric motor 24C3_1 as drive sources of a first drive system 28. Hereinafter, the electric motor 20V1_1, the electric motor 20V4_1, the electric motor 20V5_1, and the electric motor 20V8_1 may be referred to as a VTOL electric motor 20V of the first drive system 28. Further, the electric motor 24C1_1 and the electric motor 24C3_1 may be referred to as a cruise electric motor 24C of the first drive system 28. The VTOL electric motor 20V of the first drive system 28 and the cruise electric motor 24C of the first drive system 28 correspond to a first electric motor of the present invention.

The aircraft 10 includes the electric motor 20V2_2, the electric motor 20V3_2, the electric motor 20V6_2, the electric motor 20V7_2, the electric motor 24C2_2, and the electric motor 24C4_2 as drive sources of a second drive system 30. Hereinafter, the electric motor 20V2_2, the electric motor 20V3_2, the electric motor 20V6_2, and the electric motor 20V7_2 may be referred to as a VTOL electric motor 20V of the second drive system 30. Further, the electric motor 24C2_2 and the electric motor 24C4_2 may be referred to as a cruise electric motor 24C of the second drive system 30. The VTOL electric motor 20V of the second drive system 30 and the cruise electric motor 24C of the second drive system 30 correspond to a second electric motor of the present invention.

The power supply system 26 includes two main power source devices 32 and four auxiliary power source devices 34. The power supply system 26 supplies electric power to four load modules 36.

The two main power source devices 32 include a first main power source device 32a and a second main power source device 32b. The four auxiliary power source devices 34 include a first auxiliary power source device 34a, a second auxiliary power source device 34b, a third auxiliary power source device 34c, and a fourth auxiliary power source device 34d. The four load modules 36 include a first load module 36a, a second load module 36b, a third load module 36c, and a fourth load module 36d.

The power supply system 26 includes two power supply circuits 38. The two power supply circuits 38 include a first power supply circuit 38a and a second power supply circuit 38b. The first power supply circuit 38a and the second power supply circuit 38b are not connected to each other and are provided independently.

Each power supply circuit 38 includes a main power source circuit 40 and an auxiliary power source circuit 42. The main power source circuit 40 is provided for each main power source device 32. The auxiliary power source circuit 42 is provided for each auxiliary power source device 34.

Each main power source device 32 includes a gas turbine 44, a generator 46, and a power control unit (hereinafter referred to as PCU) 48. The gas turbine 44 drives the generator 46. As a result, the generator 46 generates electric power. The PCU 48 converts the AC power generated by the generator 46 into DC power and outputs the DC power to the main power source circuit 40. When starting the gas turbine 44, the PCU 48 converts the DC power supplied by the main power source circuit 40 into AC power, and outputs the AC power to the generator 46. The generator 46 is operated by the AC power input from the PCU 48, and the generator 46 drives the gas turbine 44.

Hereinafter, the generator 46 in the first main power source device 32a may be referred to as a first generator 46a. Further, the generator 46 in the second main power source device 32b may be referred to as a second generator 46b.

Each auxiliary power source device 34 includes a battery 50. The battery 50 is charged with DC power supplied from the main power source device 32. Hereinafter, the battery 50 in the first auxiliary power source device 34a may be referred to as a first battery 50a. Further, the battery 50 in the second auxiliary power source device 34b may be referred to as a second battery 50b, the battery 50 in the third auxiliary power source device 34c may be referred to as a third battery 50c, and the battery 50 in the fourth auxiliary power source device 34d may be referred to as a fourth battery 50d.

The first battery 50a and the second battery 50b supply electric power to the VTOL electric motors 20V of the first drive system 28 and the cruise electric motors 24C of the first drive system 28. That is, the first battery 50a and the second battery 50b function as power storage devices of the first drive system 28. Hereinafter, each of the first battery 50a and the second battery 50b may be referred to as a battery 50 of the first drive system 28. The third battery 50c and the fourth battery 50d supply electric power to the VTOL electric motors 20V of the second drive system 30 and the cruise electric motors 24C of the second drive system 30. That is, the third battery 50c and the fourth battery 50d function as power storage devices of the second drive system 30. Hereinafter, each of the third battery 50c and the fourth battery 50d may be referred to as a battery 50 of the second drive system 30. The battery 50 of the first drive system 28 corresponds to a first battery of the present invention. The battery 50 of the second drive system 30 corresponds to a second battery of the present invention.

Each load module 36 includes two VTOL drive units 52 and one cruise drive unit 54.

Each VTOL drive unit 52 includes an inverter 56 and the VTOL electric motor 20V. The inverter 56 converts the DC power supplied from the main power source circuit 40 into three phase AC power, and outputs the three phase AC power to the VTOL electric motor 20V.

The cruise drive unit 54 includes an inverter 58 and the cruise electric motor 24C. The inverter 58 converts the DC power supplied from the main power source circuit 40 into three phase AC power, and outputs the three phase AC power to the cruise electric motor 24C.

Each of the first load module 36a and the third load module 36c includes a converter 60. The converter 60 steps down the voltage of the DC power supplied from the main power source device 32, and outputs the stepped-down power to a device operated by DC power. The device operated by DC power is, for example, a cooling device that cools the PCU 48, the inverters 56 and 58, and the like.

Each main power source circuit 40 includes one common bus 62, one contactor unit 64, two contactor units 66, one current sensor 68, and two current sensors 70.

The common bus 62 connects one main power source device 32 and two load modules 36. The common bus 62 connects the two load modules 36 in parallel with the main power source device 32.

The contactor unit 64 is provided between the main power source device 32 and the common bus 62. The contactor unit 64 switches between a conduction state in which current flows between the main power source device 32 and the common bus 62, and an interruption state in which the flow of the current between the main power source device 32 and the common bus 62 is interrupted. The contactor unit 64 includes a contactor 64a and a contactor 64b. The contactor 64a is provided on a positive line of the main power source circuit 40. The contactor 64b is provided on a negative line of the main power source circuit 40. The contactor unit 64 may include only one of the contactor 64a or the contactor 64b.

Each contactor unit 66 is provided between each load module 36 and the common bus 62. The contactor unit 66 switches between a conduction state in which current flows between each load module 36 and the common bus 62, and an interruption state in which the flow of the current between each load module 36 and the common bus 62 is interrupted. The contactor unit 66 includes a contactor 66a and a contactor 66b. The contactor 66a is provided on the positive line of the main power source circuit 40. The contactor 66b is provided on the negative line of the main power source circuit 40. The contactor unit 66 may include only one of the contactor 66a or the contactor 66b. When the contactor unit 64 includes only the contactor 64a, each contactor unit 66 preferably includes only the contactor 66b. When the contactor unit 64 includes only the contactor 64b, each contactor unit 66 preferably includes only the contactor 66a.

The current sensor 68 is provided between the contactor unit 64 and the common bus 62. The current sensor 68 is provided on the positive line of the main power source circuit 40. Each current sensor 70 is provided between each contactor unit 66 and the common bus 62. Each current sensor 70 is provided on the positive line of the main power source circuit 40.

Each auxiliary power source circuit 42 is connected to both the main power source circuit 40 and the load module 36. The auxiliary power source circuit 42 supplies electric power from the auxiliary power source device 34 to the load module 36. The auxiliary power source circuit 42 includes a contactor unit 72 and a current sensor 74.

The contactor unit 72 is provided between the auxiliary power source device 34 and the load module 36. The contactor unit 72 switches between a conduction state in which current flows between the auxiliary power source device 34 and the load module 36, and an interruption state in which the flow of the current between the auxiliary power source device 34 and the load module 36 is interrupted. The contactor unit 72 includes a contactor 72a, a contactor 72b, and a precharge circuit 72c. The contactor 72a is provided on a positive line of the auxiliary power source circuit 42. The contactor 72b is provided on a negative line of the auxiliary power source circuit 42. The precharge circuit 72c is provided in parallel with the contactor 72b. The precharge circuit 72c includes a contactor 72d and a resistor 72e. The current sensor 74 is provided on the negative line of the auxiliary power source circuit 42.

The contactor unit 72 may include only the contactor 72b and the precharge circuit 72c. The precharge circuit 72c may be provided in parallel with the contactor 72a. In this case, the contactor unit 72 may include only the contactor 72a and the precharge circuit 72c.

A diode 76 is provided between the main power source circuit 40 and each auxiliary power source circuit 42. An anode of the diode 76 is connected to the main power source circuit 40, and a cathode of the diode 76 is connected to the auxiliary power source circuit 42. The diode 76 allows electric power to be supplied from the main power source circuit 40 to the auxiliary power source circuit 42. The diode 76 prevents electric power from being supplied from the auxiliary power source circuit 42 to the main power source circuit 40. When the main power source circuit 40 is short-circuited, electricity is prevented from flowing from the auxiliary power source device 34 to the main power source circuit 40. As a result, even when the main power source circuit 40 is short-circuited, electric power can be supplied from the auxiliary power source device 34 to the load module 36.

A transistor 78 is provided in parallel with the diode 76. When the transistor 78 is ON, electric power is supplied from the auxiliary power source device 34 to the main power source circuit 40 while bypassing the diode 76. The generator 46 is operated by the electric power supplied from the auxiliary power source device 34, and the gas turbine 44 can be started.

Among the VTOL rotors 18V disposed on the left side of the center line A of the fuselage 12 (FIG. 1), the VTOL rotors 18V driven by the VTOL electric motors 20V of the first drive system 28 are two rotors 18V1 and 18V5 (FIG. 2). Among the VTOL rotors 18V disposed on the left side of the center line A of the fuselage 12 (FIG. 1), the VTOL rotors 18V driven by the VTOL electric motors 20V of the second drive system 30 are two rotors 18V3 and 18V7 (FIG. 2). That is, among the VTOL rotors 18V disposed on the left side of the center line A of the fuselage 12, the number of the VTOL rotors 18V driven by the VTOL electric motors 20V of the first drive system 28 is equal to the number of the VTOL rotors 18V driven by the VTOL electric motors 20V of the second drive system 30.

Among the VTOL rotors 18V disposed on the right side of the center line A of the fuselage 12 (FIG. 1), the VTOL rotors 18V driven by the VTOL electric motors 20V of the first drive system 28 are two rotors 18V4 and 18V8 (FIG. 2). Among the VTOL rotors 18V disposed on the right side of the center line A of the fuselage 12 (FIG. 1), the VTOL rotors 18V driven by the VTOL electric motors 20V of the second drive system 30 are two rotors 18V2 and 18V6 (FIG. 2). That is, among the VTOL rotors 18V disposed on the right side of the center line A of the fuselage 12, the number of the VTOL rotors 18V driven by the VTOL electric motors 20V of the first drive system 28 is equal to the number of the VTOL rotors 18V driven by the VTOL electric motors 20V of the second drive system 30.

The rotor 22C1 disposed on the left side of the center line A of the fuselage 12 is driven by the cruise electric motor 24C of the first drive system 28 and is driven by the cruise electric motor 24C of the second drive system 30 (FIG. 2). That is, regarding the cruise rotors 22C disposed on the left side of the center line A of the fuselage 12, the number of the cruise rotors 22C driven by the cruise electric motor 24C of the first drive system 28 is equal to the number of the cruise rotors 22C driven by the cruise electric motor 24C of the second drive system 30.

The rotor 22C2 disposed on the right side of the center line A of the fuselage 12 is driven by the cruise electric motor 24C of the first drive system 28 and is driven by the cruise electric motor 24C of the second drive system 30 (FIG. 2). That is, regarding the cruise rotors 22C disposed on the right side of the center line A of the fuselage 12, the number of the cruise rotors 22C driven by the cruise electric motor 24C of the first drive system 28 is equal to the number of the cruise rotors 22C driven by the cruise electric motor 24C of the second drive system 30.

### [Configuration of Flight Controller]

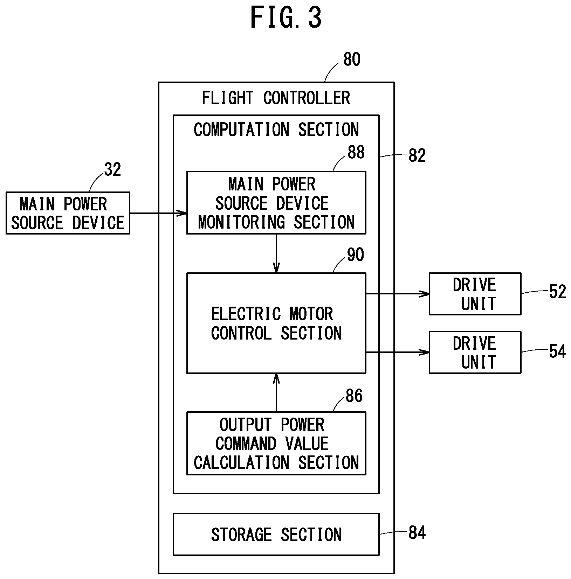

The power supply system 26 includes a flight controller 80. The flight controller 80 controls the thrust output from each VTOL rotor 18V and each cruise rotor 22C. FIG. 3 is a control block diagram of the flight controller 80.

The flight controller 80 includes a computation section 82 and a storage section 84. The computation section 82 is, for example, a processor such as a central processing unit (CPU) or a graphics processing unit (GPU). The computation section 82 includes an output power command value calculation section 86, a main power source device monitoring section 88, and an electric motor control section 90. The output power command value calculation section 86, the main power source device monitoring section 88, and the electric motor control section 90 are realized by the computation section 82 executing programs stored in the storage section 84. At least part of the output power command value calculation section 86, the main power source device monitoring section 88, and the electric motor control section 90 may be realized by an integrated circuit such as an application specific integrated circuit (ASIC) or a field-programmable gate array (FPGA). At least part of the output power command value calculation section 86, the main power source device monitoring section 88, and the electric motor control section 90 may be realized by an electronic circuit including a discrete device.

The storage section 84 is configured by a volatile memory (not shown) and a non-volatile memory (not shown) which are computer-readable storage media. The volatile memory is, for example, a random access memory (RAM) or the like. The non-volatile memory is, for example, a read only memory (ROM), a flash memory, or the like. Data and the like are stored in, for example, the volatile memory. Programs, tables, maps, and the like are stored in, for example, the non-volatile memory. At least a part of the storage section 84 may be included in the processor, the integrated circuit, or the like described above.

The output power command value calculation section 86 calculates an output power command value for each VTOL electric motor 20V, and an output power command value for each cruise electric motor 24C. The output power command value is determined in accordance with an operation amount of an operation input section by the pilot. The operation input section is, for example, a control stick, a pedal, a lever, or the like. The operation amount of the operation input section and the output power command value may not have a one to-one correspondence. The output power command value may be variable with respect to the operation amount of the operation input section in accordance with the operation range of the operation input section, the operation speed of the operation input section, the attitude of the fuselage 12, and the like.

When there is no operation input to the operation input section by the pilot, the output power command value may be automatically determined and hovering may be performed regardless of the operation amount of the operation input section. Further, when the aircraft 10 is automatically controlled, the output power command value may be automatically determined in accordance with a preset flight path, regardless of the operation amount of the operation input section.

The main power source device monitoring section 88 monitors the state of each main power source device 32. For example, the main power source device monitoring section 88 monitors whether or not the generator 46 is operating, as the state of the main power source device 32. When the generator 46 is stopped, electric power cannot be supplied from the generator 46 to each VTOL electric motor 20V and each cruise electric motor 24C.

The electric motor control section 90 controls each VTOL electric motor 20V to set the output power of each VTOL electric motor 20V to the power command value. The electric motor control section 90 controls each cruise electric motor 24C to set the output power of each cruise electric motor 24C to the power command value. When a predetermined condition is satisfied, the electric motor control section 90 changes the output power distribution in each VTOL electric motor 20V and each cruise electric motor 24C.

### [Output Power Control]

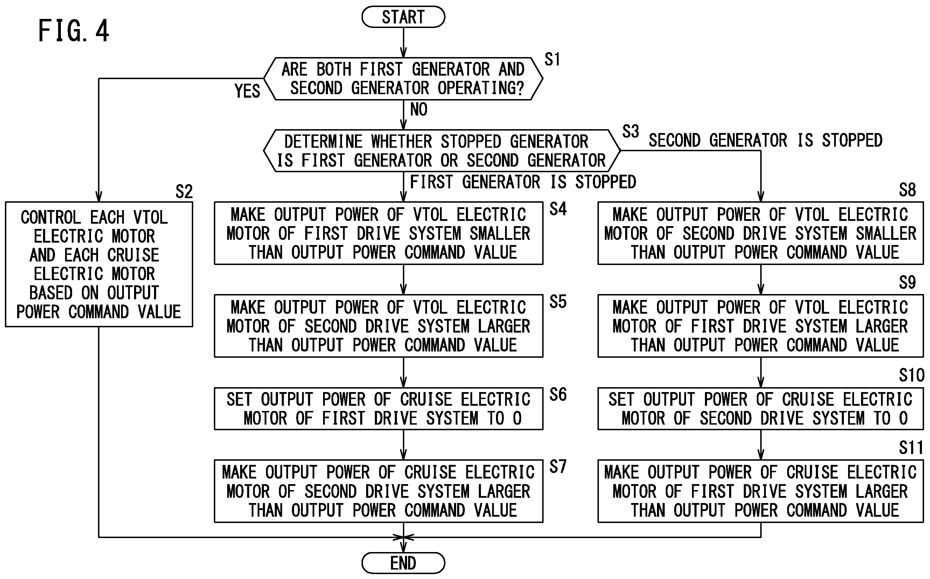

FIG. 4 is a flowchart showing a process of output power control. The output power control is performed by the electric motor control section 90. The output power control is repeatedly executed at a predetermined cycle while the aircraft 10 is activated.

In step S1, the electric motor control section 90 determines whether or not both the first generator 46a and the second generator 46b are operating. When both the first generator 46a and the second generator 46b are operating, the process proceeds to step S2. When one of the first generator 46a or the second generator 46b is stopped, the process proceeds to step S3.

In step S2, the electric motor control section 90 controls each VTOL electric motor 20V and each cruise electric motor 24C based on the output power command value. Thereafter, the output power control is ended. By the process of step S2, the output power of each VTOL electric motor 20V and each cruise electric motor 24C becomes substantially equal to the power command value.

In step S3, the electric motor control section 90 determines whether the stopped generator is the first generator 46a or the second generator 46b. When the first generator 46a is stopped, the process proceeds to step S4. When the second generator 46b is stopped, the process proceeds to step S8.

When the first generator 46a is stopped, the electric motor control section 90 changes the output power distribution in steps S4 to S7.

In step S4, the electric motor control section 90 makes the output power of each VTOL electric motor 20V of the first drive system 28 smaller than the output power command value. Thereafter, the process proceeds to step S5. By the process of step S4, the power consumption of each VTOL electric motor 20V of the first drive system 28 decreases. In addition, if other conditions are constant, the thrust generated by the VTOL rotors 18V driven by the VTOL electric motors 20V of the first drive system 28 decreases.

In step S5, the electric motor control section 90 makes the output power of each VTOL electric motor 20V of the second drive system 30 larger than the output power command value. Thereafter, the process proceeds to step S6. By the process of step S5, the power consumption of each VTOL electric motor 20V of the second drive system 30 increases. In addition, if the other conditions are constant, the thrust generated by the VTOL rotors 18V driven by the VTOL electric motors 20V of the second drive system 30 increases.

In step S5, the thrust generated by the VTOL rotors 18V driven by the VTOL electric motors 20V of the second drive system 30 is increased by an amount corresponding to the decrease in the thrust generated by the VTOL rotors 18V driven by the VTOL electric motors 20V of the first drive system 28 in step S4. As a result, the sum of the thrust generated by the VTOL rotors 18V driven by the VTOL electric motors 20V of the first drive system 28 and the thrust generated by the VTOL rotors 18V driven by the VTOL electric motors 20V of the second drive system 30 is maintained before and after the change of the output power distribution.

In step S6, the electric motor control section 90 sets the output power of each cruise electric motor 24C of the first drive system 28 to 0. Thereafter, the process proceeds to step S7. By the process of step S6, the power consumption of each cruise electric motor 24C of the first drive system 28 decreases. The thrust generated by the cruise rotors 22C driven by the cruise electric motors 24C of the first drive system 28 becomes 0.

In step S7, the electric motor control section 90 makes the output power of each cruise electric motor 24C of the second drive system 30 larger than the output power command value. Thereafter, the output power control is ended. By the process of step S7, the power consumption of each cruise electric motor 24C of the second drive system 30 increases. In addition, if the other conditions are constant, the thrust generated by the cruise rotors 22C driven by the cruise electric motors 24C of the second drive system 30 increases. The sum of the thrust generated by the cruise rotors 22C driven by the cruise electric motors 24C of the first drive system 28 and the thrust generated by the cruise rotors 22C driven by the cruise electric motors 24C of the second drive system 30 is decreased as compared with that before the change of the output power distribution.

When the second generator 46b is stopped, the electric motor control section 90 changes the output power distribution in steps S8 to S11.

In step S8, the electric motor control section 90 makes the output power of each VTOL electric motor 20V of the second drive system 30 smaller than the output power command value. Thereafter, the process proceeds to step S9. By the process of step S8, the power consumption of each VTOL electric motor 20V of the second drive system 30 decreases. In addition, if other conditions are constant, the thrust generated by the VTOL rotors 18V driven by the VTOL electric motors 20V of the second drive system 30 decreases.

In step S9, the electric motor control section 90 makes the output power of each VTOL electric motor 20V of the first drive system 28 larger than the output power command value. Thereafter, the process proceeds to step S10. By the process of step S9, the power consumption of each VTOL electric motor 20V of the first drive system 28 increases. In addition, if the other conditions are constant, the thrust generated by the VTOL rotors 18V driven by the VTOL electric motors 20V of the first drive system 28 increases.

In step S9, the thrust generated by the VTOL rotors 18V driven by the VTOL electric motors 20V of the first drive system 28 is increased by an amount corresponding to the decrease in the thrust generated by the VTOL rotors 18V driven by the VTOL electric motors 20V of the second drive system 30 in step S8. As a result, the sum of the thrust generated by the VTOL rotors 18V driven by the VTOL electric motors 20V of the first drive system 28 and the thrust generated by the VTOL rotors 18V driven by the VTOL electric motors 20V of the second drive system 30 is maintained before and after the change of the output power distribution.

In step S10, the electric motor control section 90 sets the output power of each cruise electric motor 24C of the second drive system 30 to 0. Thereafter, the process proceeds to step S11. By the process of step S10, the power consumption of each cruise electric motor 24C of the second drive system 30 decreases. The thrust generated by the cruise rotors 22C driven by the cruise electric motors 24C of the second drive system 30 becomes 0.

In step S11, the electric motor control section 90 makes the output power of each cruise electric motor 24C of the first drive system 28 larger than the output power command value. Thereafter, the output power control is ended. By the process of step S11, the power consumption of each cruise electric motor 24C of the first drive system 28 increases. In addition, if the other conditions are constant, the thrust generated by the cruise rotors 22C driven by the cruise electric motors 24C of the first drive system 28 increases. The sum of the thrust generated by the cruise rotors 22C driven by the cruise electric motors 24C of the first drive system 28 and the thrust generated by the cruise rotors 22C driven by the cruise electric motors 24C of the second drive system 30 is decreased as compared with that before the change of the output power distribution.

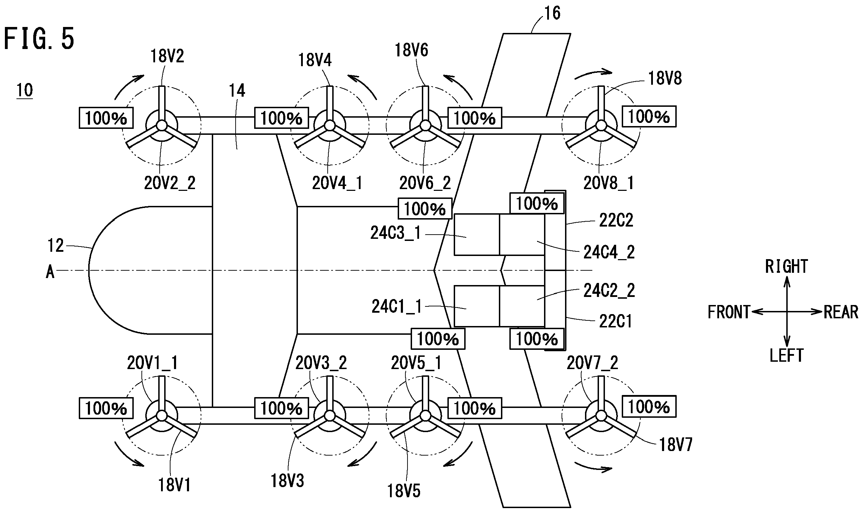

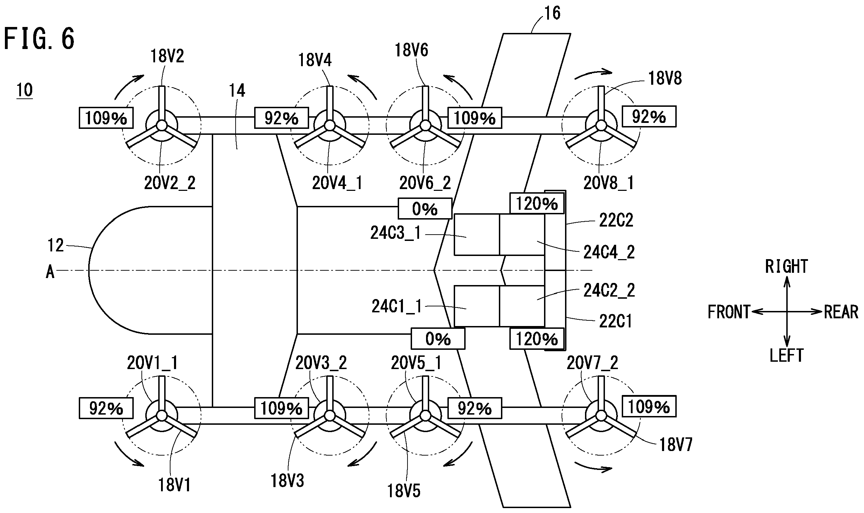

FIGS. 5 and 6 are image diagrams of output power distribution in each VTOL electric motor 20V and each cruise electric motor 24C. The numerical values of percentages shown in FIGS. 5 and 6 indicate the ratio of the output power to the output power command value for each VTOL electric motor 20V and each cruise electric motor 24C.

FIG. 5 shows an example of output power distribution when both the first generator 46a and the second generator 46b are operating. In this case, the electric motor control section 90 controls each VTOL electric motor 20V of the first drive system 28 and each cruise electric motor 24C of the first drive system 28 to make the output power thereof equal to the output power command value. Further, the electric motor control section 90 controls each VTOL electric motor 20V of the second drive system 30 and each cruise electric motor 24C of the second drive system 30 to make the output power thereof equal to the output power command value.

FIG. 6 shows an example of output power distribution when the first generator 46a is stopped and the second generator 46b is operating. The electric motor control section 90 controls each VTOL electric motor 20V of the first drive system 28 to make the output power thereof smaller than the output power command value. In addition, the electric motor control section 90 controls each VTOL electric motor 20V of the second drive system 30 to make the output power thereof larger than the output power command value. As a result, the thrust generated by the VTOL rotors 18V driven by the VTOL electric motors 20V of the second drive system 30 is increased by an amount corresponding to the decrease in the thrust generated by the VTOL rotors 18V driven by the VTOL electric motors 20V of the first drive system 28. As a result, the sum of the thrust generated by the VTOL rotors 18V driven by the VTOL electric motors 20V of the first drive system 28 and the thrust generated by the VTOL rotors 18V driven by the VTOL electric motors 20V of the second drive system 30 is maintained before and after the change of the output power distribution.

Further, the electric motor control section 90 controls each cruise electric motor 24C of the first drive system 28 to set the output power thereof to 0. In addition, the electric motor control section 90 controls each cruise electric motor 24C of the second drive system 30 to make the output power thereof larger than the output power command value. However, the sum of the thrust generated by the cruise rotors 22C driven by the cruise electric motors 24C of the first drive system 28 and the thrust generated by the cruise rotors 22C driven by the cruise electric motors 24C of the second drive system 30 is decreased as compared with that before the change of the output power distribution. Thus, the thrust generated by the cruise rotors 22C decreases in the aircraft 10 as a whole. As a result, the airspeed of the aircraft 10 decreases, and the drag acting on the fuselage 12 can be reduced, whereby the power consumption rate can be improved. Therefore, the operation duration of the VTOL electric motors 20V and the cruise electric motors 24C of the first drive system 28 can be increased.

### [Advantageous Effects]

For example, when the gas turbine 44 of the first main power source device 32a is stopped, the first generator 46a cannot generate electric power. Even in this case, the VTOL electric motors 20V and the cruise electric motors 24C of the first drive system 28 can continue to operate by the batteries 50 of the first drive system 28. It is conceivable to increase the capacity of the battery 50 in order to increase the flight duration of the aircraft 10 in a case where the generator 46 of one of the main power source devices 32 cannot generate electric power. However, in this case, the weight of the battery 50 increases and the weight of the fuselage 12 increases. Also, the cost of manufacturing the aircraft 10 increases.

In the flight controller 80 of the present embodiment, the electric motor control section 90 changes the output power distribution in the following case. The case indicates a state in which electric power cannot be supplied from the first generator 46a to the VTOL electric motors 20V and the cruise electric motors 24C of the first drive system 28 and electric power can be supplied from the second generator 46b to the VTOL electric motors 20V and the cruise electric motors 24C of the second drive system 30. In this case, the VTOL electric motors 20V and the cruise electric motors 24C of the first drive system 28 are driven by the electric power of the batteries 50 of the first drive system 28.

The output power distribution is changed in the following manner. Specifically, the electric motor control section 90 makes the output power of each VTOL electric motor 20V of the first drive system 28 smaller than the output power command value, and makes the output power of each VTOL electric motor 20V of the second drive system 30 larger than the output power command value. Further, the electric motor control section 90 makes the output power of each cruise electric motor 24C of the first drive system 28 smaller than the output power command value, and makes the output power of the cruise electric motor 24C of the second drive system 30 larger than the output power command value.

As a result, the power consumption of each VTOL electric motor 20V and each cruise electric motor 24C of the first drive system 28 decreases. Therefore, the operation duration of the VTOL electric motors 20V and the cruise electric motors 24C of the first drive system 28 by the electric power of the batteries 50 of the first drive system 28 can be increased, whereby the flight duration of the aircraft 10 can be increased.

In the flight controller 80 of the present embodiment, the electric motor control section 90 reduces the sum of the thrust generated by the cruise rotors 22C driven by the cruise electric motors 24C of the first drive system 28 and the thrust generated by the cruise rotors 22C driven by the cruise electric motors 24C of the second drive system 30, as compared with that before the change of the output power distribution. Thus, the thrust generated by the cruise rotors 22C decreases in the aircraft 10 as a whole. As a result, the airspeed of the aircraft 10 decreases, and the drag acting on the fuselage 12 can be reduced, whereby the power consumption rate can be improved. Therefore, the operation duration of the VTOL electric motors 20V and the cruise electric motors 24C of the first drive system 28 can be increased, and flight duration of the aircraft 10 can be increased.

In the aircraft 10 of the present embodiment, among the VTOL rotors 18V disposed on the left side of the center line A of the fuselage 12, the number of the VTOL rotors 18V driven by the VTOL electric motors 20V of the first drive system 28 is equal to the number of the VTOL rotors 18V driven by the VTOL electric motors 20V of the second drive system 30. Further, among the VTOL rotors 18V disposed on the right side of the center line A of the fuselage 12, the number of the VTOL rotors 18V driven by the VTOL electric motors 20V of the first drive system 28 is equal to the number of the VTOL rotors 18V driven by the VTOL electric motors 20V of the second drive system 30. As a result, when the thrust generated by the VTOL rotors 18V driven by the VTOL electric motors 20V of the first drive system 28 is decreased and the thrust generated by the VTOL rotors 18V driven by the VTOL electric motors 20V of the second drive system 30 is increased, the attitude of the fuselage 12 can be stabilized.

Note that the present invention is not limited to the above disclosure, and various modifications are possible without departing from the scope defined by the appended claims.

In the first embodiment, the first power supply circuit 38a and the second power supply circuit 38b are not connected to each other and are provided independently. However, the first power supply circuit 38a and the second power supply circuit 38b may be connected to each other via a switch.

In the first embodiment, one cruise rotor 22C is provided on the left side of the center line A of the fuselage 12, and one cruise rotor 22C is provided on the right side of the center line A of the fuselage 12. On the other hand, two cruise rotors 22C may be provided on the left side of the fuselage 12, and two cruise rotors 22C may be provided on the right side of the fuselage 12. In this case, one cruise rotor 22C is driven by one cruise electric motor 24C. Further, one cruise rotor 22C may be provided at the center of the fuselage 12 in the left-right direction. In this case, one cruise rotor 22C is driven by two cruise electric motors 24C.

The VTOL rotor 18V and the cruise rotor 22C of the first embodiment may be coaxial rotors. In this case, one of the two coaxial rotors may be driven by the electric motor of the first drive system 28, and the other rotor may be driven by the electric motor of the second drive system 30.

### [Invention Obtained from Embodiment]

The invention that can be grasped from the above embodiment will be described below.

Provided is the control device (80) for the aircraft (10), the aircraft including: at least one first generator (46a) configured to generate electric power; at least one first battery (50a, 50b) configured to store electric power; at least one first electric motor (20V1_1, 20V4_1, 20V5_1, 20V8_1, 24C1_1, 24C3_1) configured to operate with electric power supplied from the first generator and the first battery; at least one second generator (46b) configured to generate electric power; at least one second battery (50c, 50d) configured to store electric power; at least one second electric motor (20V2_2, 20V3_2, 20V6_2, 20V7_2, 24C2_2, 24C4_2) configured to operate with electric power supplied from the second generator and the second battery; and the plurality of rotors (18V, 22C) configured to generate thrust acting on the fuselage (12), wherein the control device includes the electric motor control section (90) configured to control the first electric motor and the second electric motor, and wherein each of the rotors is driven by one of the first electric motor or the second electric motor, or both of the first electric motor and the second electric motor, and in a case where supply of electric power from the first generator to the first electric motor is unavailable and supply of electric power from the second generator to the second electric motor is available, the electric motor control section reduces power consumption of the first electric motor by reducing thrust generated by the rotor driven by the first electric motor, and increases thrust generated by the rotor driven by the second electric motor, as compared with a case where the supply of the electric power from the first generator to the first electric motor is available and the supply of the electric power from the second generator to the second electric motor is available. According to this feature, the operation duration of the first electric motor can be increased, and the flight duration of the aircraft can be increased.

In the above-described control device for the aircraft, each of the first electric motor and the second electric motor may drive the horizontal rotor (22C) configured to generate thrust in the horizontal direction, and in the case where the supply of the electric power from the first generator to the first electric motor is unavailable and the supply of the electric power from the second generator to the second electric motor is available, the electric motor control section may reduce the sum of thrust generated by the horizontal rotor driven by the first electric motor and thrust generated by the horizontal rotor driven by the second electric motor, as compared with the case where the supply of the electric power from the first generator to the first electric motor is available and the supply of the electric power from the second generator to the second electric motor is available. According to this feature, the operation duration of the first electric motor can be increased, and the flight duration of the aircraft can be increased.

In the above-described control device for the aircraft, the number of the rotors disposed on one side of the center line of the fuselage in the left-right direction may be equal to the number of the rotors disposed on another side of the center, among the rotors disposed on the one side, the number of the rotors driven by the first electric motor may be equal to the number of the rotors driven by the second electric motor, and among the rotors disposed on the other side, the number of the rotors driven by the first electric motor may be equal to the number of the rotors driven by the second electric motor. According to this feature, the attitude of the fuselage can be stabilized.

In the above-described control device for the aircraft, each of the rotors may be the vertical rotor (18V) configured to generate thrust in the vertical direction or the horizontal rotor configured to generate thrust in the horizontal direction. According to this feature, the vertical rotor or the horizontal rotor can be driven for a longer period of time, and the flight duration of the aircraft can be increased.

When a first generator (46a) is stopped, an electric motor control section (90) reduces the output power of a VTOL electric motor (20V) and a cruise electric motor (24C) that operate with electric power supplied from the first generator (46a), and increases the output power of a VTOL electric motor (20V) and a cruise electric motor (24C) that operate with electric power supplied from a second generator (46b).

## Claims

1. A control device (80) for an aircraft (10),
the aircraft comprising:
at least one first generator (46a) configured to generate electric power;
at least one first battery (50a, 50b) configured to store electric power;
at least one first electric motor (20V1_1, 20V4_1, 20V5_1, 20V8_1, 24C1_1, 24C3_1) configured to operate with electric power supplied from the first generator and the first battery;
at least one second generator (46b) configured to generate electric power;
at least one second battery (50c, 50d) configured to store electric power;
at least one second electric motor (20V2_2, 20V3_2, 20V6_2, 20V7_2, 24C2_2, 24C4_2) configured to operate with electric power supplied from the second generator and the second battery; and
a plurality of rotors (18V, 22C) configured to generate thrust acting on a fuselage (12),
wherein the control device comprises an electric motor control section (90) configured to control the first electric motor and the second electric motor, and
wherein each of the rotors is driven by one of the first electric motor or the second electric motor, or both of the first electric motor and the second electric motor, **characterised in that** the electric motor control section (90) is configured to,
in a case that the electric motor control section (90) determines that supply of electric power from the first generator to the first electric motor is unavailable and supply of electric power from the second generator to the second electric motor is available, reduce power consumption of the first electric motor by reducing thrust generated by the rotor driven by the first electric motor, and increase thrust generated by the rotor driven by the second electric motor, as compared with a case where the supply of the electric power from the first generator to the first electric motor is available and the supply of the electric power from the second generator to the second electric motor is available.

2. The control device for the aircraft according to claim 1, wherein
each of the first electric motor and the second electric motor drives a horizontal rotor (22C) configured to generate thrust in a horizontal direction, and
in the case that the electric motor control section (90) determines that the supply of the electric power from the first generator to the first electric motor is unavailable and the supply of the electric power from the second generator to the second electric motor is available, the electric motor control section is configured to reduce a sum of thrust generated by the horizontal rotor driven by the first electric motor and thrust generated by the horizontal rotor driven by the second electric motor, as compared with the case where the supply of the electric power from the first generator to the first electric motor is available and the supply of the electric power from the second generator to the second electric motor is available.

3. The control device for the aircraft according to claim 1 or 2, wherein
a number of the rotors disposed on one side of a center line of the fuselage in a left-right direction is equal to a number of the rotors disposed on another side of the center,
among the rotors disposed on the one side, a number of the rotors driven by the first electric motor is equal to a number of the rotors driven by the second electric motor, and
among the rotors disposed on the other side, a number of the rotors driven by the first electric motor is equal to a number of the rotors driven by the second electric motor.

4. The control device for the aircraft according to any one of claims 1 to 3, wherein
each of the rotors is a vertical rotor (18V) configured to generate thrust in a vertical direction or a horizontal rotor configured to generate thrust in a horizontal direction.

## Patentansprüche

1. Steuervorrichtung (80) für ein Luftfahrzeug (10),
wobei das Luftfahrzeug umfasst:
wenigstens einen ersten Generator (46a), welcher dazu eingerichtet ist, elektrische Energie zu erzeugen;
wenigstens eine erste Batterie (50a, 50b), welche dazu eingerichtet ist, elektrische Energie zu speichern;
wenigstens einen ersten Elektromotor (20V1_1, 20V4_1, 20V5_1, 20V8_1, 24C1_1, 24C3_1), welcher dazu eingerichtet ist, mit elektrischer Energie betrieben zu werden, welche von dem ersten Generator und der ersten Batterie zugeführt wird;
wenigstens einen zweiten Generator (46b), welcher dazu eingerichtet ist, elektrische Energie zu erzeugen;
wenigstens eine zweite Batterie (50c, 50d), welche dazu eingerichtet ist, elektrische Energie zu speichern;
wenigstens einen zweiten Elektromotor (20V2_2, 20V3_2, 20V6_2, 20V7_2, 24C2_2, 24C4_2), welcher dazu eingerichtet ist, mit elektrischer Energie betrieben zu werden, welche von dem zweiten Generator und der zweiten Batterie zugeführt wird; und
eine Mehrzahl von Rotoren (18V, 22C), welche dazu eingerichtet sind, einen Schub zu erzeugen, welcher an einem Rumpf (12) wirkt,
wobei die Steuervorrichtung einen Elektromotor-Steuerabschnitt (90) umfasst, welcher dazu eingerichtet ist, den ersten Elektromotor und den zweiten Elektromotor zu steuern, und
wobei jeder der Rotoren durch einen aus dem ersten Elektromotor oder dem zweiten Elektromotor oder durch beide aus dem ersten Elektromotor und dem zweiten Elektromotor angetrieben wird,
**dadurch gekennzeichnet, dass** der Elektromotor-Steuerabschnitt (90) dazu eingerichtet ist, in einem Fall, in welchem der Elektromotor-Steuerabschnitt (90) bestimmt, dass eine Zufuhr von elektrischer Energie von dem ersten Generator zu dem ersten Elektromotor nicht verfügbar ist und eine Zufuhr von elektrischer Energie von dem zweiten Generator zu dem zweiten Elektromotor verfügbar ist, einen Energieverbrauch des ersten Elektromotors zu reduzieren, indem ein Schub reduziert wird, welcher durch den Rotor erzeugt wird, welcher durch den ersten Elektromotor angetrieben wird, und einen Schub zu erhöhen, welcher durch den Rotor erzeugt wird, welcher durch den zweiten Elektromotor angetrieben wird, im Vergleich zu einem Fall, in welchem die Zufuhr der elektrischen Energie von dem ersten Generator zu dem ersten Elektromotor verfügbar ist und die Zufuhr der elektrischen Energie von dem zweiten Generator zu dem zweiten Elektromotor verfügbar ist.

2. Steuervorrichtung für das Luftfahrzeug nach Anspruch 1, wobei
jeder aus dem ersten Elektromotor und dem zweiten Elektromotor einen horizontalen Rotor (22C) antreibt, welcher dazu eingerichtet ist, einen Schub in einer horizontalen Richtung zu erzeugen, und
in dem Fall, dass der Elektromotor-Steuerabschnitt (90) bestimmt, dass die Zufuhr der elektrischen Energie von dem ersten Generator zu dem ersten Elektromotor nicht verfügbar ist und die Zufuhr der elektrischen Energie von dem zweiten Generator zu dem zweiten Elektromotor verfügbar ist, der Elektromotor-Steuerabschnitt dazu eingerichtet ist, eine Summe eines Schubes, welcher durch den horizontalen Rotor erzeugt wird, welcher durch den ersten Elektromotor angetrieben wird, und eines Schubes, welcher durch den horizontalen Rotor erzeugt wird, welcher durch den zweiten Elektromotor angetrieben wird, zu reduzieren, im Vergleich zu dem Fall, in welchem die Zufuhr der elektrischen Energie von dem ersten Generator zu dem ersten Elektromotor verfügbar ist und die Zufuhr der elektrischen Energie von dem zweiten Generator zu dem zweiten Elektromotor verfügbar ist.

3. Steuervorrichtung für das Luftfahrzeug nach Anspruch 1 oder 2, wobei
eine Anzahl der Rotoren, welche an einer Seite einer Mittellinie des Rumpfs in einer Links-Rechts-Richtung angeordnet sind, gleich einer Anzahl der Rotoren ist, welche an einer anderen Seite der Mitte angeordnet sind,
unter den Rotoren, welche an der einen Seite angeordnet sind, eine Anzahl der Rotoren, welche durch den ersten Elektromotor angetrieben werden, gleich einer Anzahl der Rotoren ist, welche durch den zweiten Elektromotor angetrieben werden, und
unter den Rotoren, welche an der anderen Seite angeordnet sind, eine Anzahl der Rotoren, welche durch den ersten Elektromotor angetrieben werden, gleich einer Anzahl der Rotoren ist, welche durch den zweiten Elektromotor angetrieben werden.

4. Steuervorrichtung für das Luftfahrzeug nach einem der Ansprüche 1 bis 3, wobei
jeder der Rotoren ein vertikaler Rotor (18V) ist, welcher dazu eingerichtet ist, einen Schub in einer vertikalen Richtung zu erzeugen, oder ein horizontaler Rotor ist, welcher dazu eingerichtet ist, einen Schub in einer horizontalen Richtung zu erzeugen.

## Revendications

1. Dispositif de commande (80) pour un aéronef (10),
l'aéronef comprenant :
au moins un premier générateur (46a) configuré pour générer une puissance électrique ;
au moins une première batterie (50a, 50b) configurée pour stocker une puissance électrique ;
au moins un premier moteur électrique (20V1_1, 20V4_1, 20V5_1, 20V8_1, 24C1_1, 24C3_1) configuré pour fonctionner avec une puissance électrique fournie en provenance du premier générateur et de la première batterie ;
au moins un deuxième générateur (46b) configuré pour générer une puissance électrique ;
au moins une deuxième batterie (50c, 50d) configurée pour stocker une puissance électrique ;
au moins un deuxième moteur électrique (20V2_2, 20V3_2, 20V6_2, 20V7_2, 24C2_2, 24C4_2) configuré pour fonctionner avec une puissance électrique fournie à partir du deuxième générateur et de la deuxième batterie ; et
une pluralité de rotors (18V, 22C) configurée pour générer une poussée agissant sur un fuselage (12),
dans lequel le dispositif de commande comprend une section de commande de moteur électrique (90) configurée pour commander le premier moteur électrique et le deuxième moteur électrique, et
dans lequel chacun des rotors est entraîné par l'un du premier moteur électrique ou du deuxième moteur électrique, ou les deux du premier moteur électrique et du deuxième moteur électrique, **caractérisé en ce que** la section de commande de moteur électrique (90) est configurée pour,
dans un cas où la section de commande de moteur électrique (90) détermine que l'alimentation en puissance électrique du premier moteur électrique en provenance du premier générateur est indisponible et l'alimentation en puissance électrique du deuxième moteur électrique en provenance du deuxième générateur est disponible, réduire une consommation de puissance du premier moteur électrique en réduisant une poussée générée par le rotor entraîné par le premier moteur électrique, et augmenter une poussée générée par le moteur entraîné par le deuxième moteur électrique, par rapport à un cas où l'alimentation en puissance électrique du premier moteur électrique en provenance du premier générateur est disponible et l'alimentation en puissance électrique du deuxième moteur électrique en provenance du deuxième générateur est disponible.

2. Dispositif de commande pour l'aéronef selon la revendication 1, dans lequel
chacun du premier moteur électrique et du deuxième moteur électrique entraîne un rotor horizontal (22C) configuré pour générer une poussée dans une direction horizontale, et
dans le cas où la section de commande de moteurélectrique (90) détermine que l'alimentation en puissance électrique du premier moteur électrique en provenance du premier générateur est indisponible et l'alimentation en puissance électrique du deuxième moteur électrique en provenance du deuxième générateur est disponible, la section de commande de moteur électrique est configurée pour réduire une somme d'une poussée générée par le rotor horizontal entraîné par le premier moteur électrique et d'une poussée générée par le rotor horizontal entraîné par le deuxième moteur électrique, par rapport au cas où l'alimentation en puissance électrique du premier moteur électrique en provenance du premier générateur est disponible et l'alimentation en puissance électrique du deuxième moteur électrique en provenance du deuxième générateur est disponible.

3. Dispositif de commande pour l'aéronef selon la revendication 1 ou 2, dans lequel
un nombre des rotors disposés sur un côté d'une ligne centrale du fuselage dans une direction gauche-droite est égal à un nombre des rotors disposés sur un autre côté du centre,
parmi les rotors disposés sur ledit côté, un nombre des rotors entraînés par le premier moteur électrique est égal à un nombre des rotors entraînés par le deuxième moteur électrique, et
parmi les rotors disposés sur l'autre côté, un nombre des rotors entraînés par le premier moteur électrique est égal à un nombre des rotors entraînés par le deuxième moteur électrique.

4. Dispositif de commande pour l'aéronef selon l'une quelconque des revendications 1 à 3, dans lequel
chacun des rotors est un rotor vertical (18V) configuré pour générer une poussée dans une direction verticale ou un rotor configuré pour générer une poussée dans une direction horizontale.
